# NEUE EUROPÄISCHE PATENTSCHRIFT

(11) **EP 1 048 513 B2**
(45) Veröffentlichungstag und Bekanntmachung des Hinweises auf die Entscheidung über den Einspruch: **03.09.2008**
(45) Hinweis auf die Patenterteilung: 09.02.2005
(21) Anmeldenummer: 99125070.5
(22) Anmeldetag: 16.12.1999
(51) Int. Cl.: B60N 2/44, B60N 2/08

(54) **Handhebelvorrichtung für eine Betätigungseinrichtung an einem Fahrzeugsitz**
Handle device for an actuating device on a vehicle seat
Dispositif de levier pour un dispositif de commande sur un siège de véhicule

(30) Priorität: 27.04.1999 DE 19918986
(43) Veröffentlichungstag der Anmeldung: 02.11.2000
(73) Patentinhaber: C.Rob. Hammerstein GmbH & Co.KG, 42699 Solingen (DE)
(72) Erfinder: Frohnhaus, Ernst-Reiner, 42699 Solingen (DE); Karthaus, Ulrich, 42899 Remscheid (DE)
(74) Vertreter: Bauer, Wulf

(56) Entgegenhaltungen:
- EP-A- 0 094 141
- EP-A- 0 408 932
- EP-A- 0 845 384
- DE-A- 19 729 111
- DE-C- 4 439 975
- US-A- 3 447 190
- US-A- 4 653 975

## Beschreibung

Die Erfindung bezieht sich auf eine Handhebelvorrichtung nach dem Oberbegriff des Anspruchs 1 (s. zum Beispiel EP-A-0 845 384).

Mehrere Betätigungseinrichtungen von Fahrzeugsitzen arbeiten mit einem schwenkbaren Handhebel der eingangs genannten Art, mit dem ein Betätigungsglied, das zumeist als Bowdenzug ausgeführt ist, aber auch eine Zuglasche, ein Druckarm oder ein Seilzug sein kann, betätigt wird.

Bei derartigen Handhebelvorrichtungen soll der Handhebel in der Ruheposition klapperfrei und ausreichend fixiert gehalten werden, so dass er im Fahrbetrieb weder sich selbsttätig auslöst noch irgendwie zum Klappern neigt.

Nun gibt es Betätigungseinrichtungen, bei denen der Verlauf der am Handhebel aufzubringenden Kraft, um beispielsweise den Handhebel aus der Ruheposition in die Betätigungsstellung zu schwenken, nicht gleichmäßig ist, sondern Sprungstellen aufweist. Dies ist beispielsweise der Fall bei Arretiervorrichtungen für Längsverstelleinrichtungen von Fahrzeugsitzen, die mit mehreren Arretierstiften arbeiten. Ein Beispiel für derartige Arretiervorrichtungen gibt die EP 408 932 B1. Im verriegelten Zustand greifen pro Sitzseite nur einige, meist zwei Arretierstifte durch Öffnungen einer Rastenleiste, während die restlichen Arretierstifte eingriffslos auf der Rastenleiste aufliegen. Wird nun die Arretierung gelöst, indem der zugehörige Handhebel von der Ruheposition in die Betätigungsstellung geschwenkt wird, so werden zunächst die mehr oder weniger stark im Eingriff befindlichen Arretierstifte gehoben, anschließend kommen die nicht rastenden Arretierstifte hinzu und werden ebenfalls angezogen. Der Benutzer spürt mit jedem hinzukommenden Arretierstift bzw. Rastzahn, den er in die Freigabestellung ziehen will, einen mehr oder weniger großen Kraftsprung, also eine Änderung des Momentes, am Handhebel. Es besteht die Gefahr, dass er die Bewegung des Handhebels zu früh abbricht, weil er meint, es sei bereits eine Endstellung erreicht, tatsächlich befindet sich der Handhebel aber noch nicht in der Betätigungsstellung, so dass ein vollständiges Freirasten noch nicht erfolgt ist.

Für derartige Verstellvorrichtungen bzw. Arretiereinrichtungen ist die Handhebelvorrichtung der eingangs genannten Art im wesentlichen bestimmt.

Ausgehend von der Handhebelvorrichtung der eingangs genannten Art liegt der Erfindung die Aufgabe zugrunde, die vorbekannte Handhebelvorrichtung dahingehend weiterzubilden, dass die Betätigung des Handhebels für einen Benutzer vereinfacht wird und die Gefahr von Fehlbedienungen verringert wird, indem der Benutzer eine Unterstützung bei der Bewegung des Handhebels erfährt, die so geartet ist, dass eine Bewegung möglichst immer in die jeweilige Endstellung weitergeführt wird, insbesondere in die Betätigungsstellung.

Ausgehend von der Handhebelvorrichtung der eingangs genannten Art wird diese Aufgabe dadurch gelöst durch die Merkmale des Anspruchs 1.

Erfindungsgemäß wird der Handhebelvorrichtung also eine Feder zugeordnet, die man allgemein als Unterstützungsfeder bezeichnet. Grundsätzlich ist eine Handhebelvorrichtung auch ohne eine derartige Feder funktionsfähig, sie ist deshalb bei der Handhebelvorrichtung nach dem Stand der Technik auch nicht vorgesehen. Die Feder, wie sie die Erfindung lehrt, hat einen Totpunkt in einer Zwischenstellung des Handhebels zwischen seinen beiden Endpositionen, also zwischen der Ruheposition und der Betätigungsstellung. Im Bereich dieses Totpunktes übt die Feder kein Drehmoment auf den Handhebel aus, außerhalb des Bereichs des Totpunktes zieht die Feder den Handhebel entweder in die Ruheposition oder in die Betätigungsstellung.

Die elastische Vorbelastung des Handhebels in die Ruheposition dient einer klapperfreien, gebrauchssicheren Positionierung des Handhebels in der Ruheposition, in der er sich normalerweise befindet.

Die elastische Vorbelastung des Handhebels in die Betätigungsstellung unterstützt die Bewegung des Handhebels in diese andere Endstellung und ist vorgesehen, den in der Regel in gleicher Schwenkrichtung ansteigenden Bedarf der Betätigungseinrichtung an Lösekraft zu kompensieren. Diese Kompensation kann teilweise, vollständig oder auch übervollständig erfolgen. Entsprechend kann die Federkraft der Feder vorgegeben sein. Unter übervollständiger Kompensierung wird verstanden, dass die Feder der Handhebelvorrichtung allein ausreicht, um den durch die Betätigungseinrichtung belasteten Bowdenzug so zu ziehen, dass der Handhebel in die Betätigungsstellung hineingelangt. Dann muß für die Rückbewegung eine Kraft, also ein Drehmoment am Handhebel, aufgebracht werden.

Im Totpunkt hat die Feder eine maximale Federspannung. Wenn sie eine Druckfeder ist, hat sie also ihre kürzeste Länge, wenn sie eine Zugfeder ist, hat sie ihre größte Länge. Der Totpunkt kann beliebig im Schwenkwinkel zwischen Ruheposition und Betätigungsstellung angeordnet werden, er fällt jedoch nicht mit einer der Endpositionen zusammen. Im Totpunkt schneidet eine Wirklinie der Feder die Schwenkachse. Unter Wirklinie der Feder wird eine Gerade verstanden, die durch die Angriffspunkte der Feder hindurchläuft, wenn die Feder als Schraubenzug bzw. als Schraubendruckfeder ausgebildet ist. Unter Angriffspunkten der Feder wird der Kontaktbereich der Feder mit dem Handhebel bzw. dem Lagerteil verstanden, an dem die Feder angreift.

Die erfindungsgemäße Handhebelvorrichtung verhält sich also anders, wenn sie bestimmungsgemäß mit einer Betätigungseinrichtung verbunden ist, als ohne eine derartige Betätigungseinrichtung Wenn am anderen Ende des Bowdenzugs keine Betätigungseinrichtung angeordnet ist, bewirkt die Feder stets, dass der Handhebel sowohl in seine Ruheposition als auch in seine Betätigungsstellung elastisch vorbelastet ist.

Wenn sich eine Betätigungseinrichtung am anderen Ende des Bowdenzugs befindet, ist es nun so, dass der Handhebel nach wie vor in seine Ruheposition elastisch vorbelastet ist. Ob er auch in seine Betätigungsstellung elastisch vorbelastet ist, hängt von der Auswahl und Abstimmung der Feder ab. Er kann in seine Betätigungsstellung elastisch vorbelastet sein, muß es aber nicht. Bevorzugt wird, dass der Handhebel nur in seine Ruheposition elastisch vorbelastet ist, weil eine stabile Position des Handhebels in der Betätigungsstellung dazu führen kann, dass die Betätigungseinrichtung nicht arretiert wird, sondern unarretiert bleibt, was zu Problemen führen kann.

Weitere Vorteile der Erfindung ergeben sich aus den übrigen Ansprüchen sowie der nun folgenden Beschreibung eines nicht einschränkend zu verstehenden Ausführungsbeispiels, das unter Bezugnahme auf die Zeichnung im folgenden näher erläutert wird. In dieser Zeichnung zeigen:
- Fig. 1:: eine perspektivische, teilweise schnittbildlich ausgeführte Darstellung einer Handhebelvorrichtung mit nur schematisch angedeuteter Betätigungsvorrichtung,
- Fig. 2:: eine perspektivische Darstellung einer Handhebelvorrichtung, die zusätzlich noch eine Zuschaltfeder hat, und
- Fig. 3:: einen Ausschnitt aus Figur 2 für den Schaltbereich der Zuschaltfeder, bei anderer Betrachtungsrichtung als Figur 2.

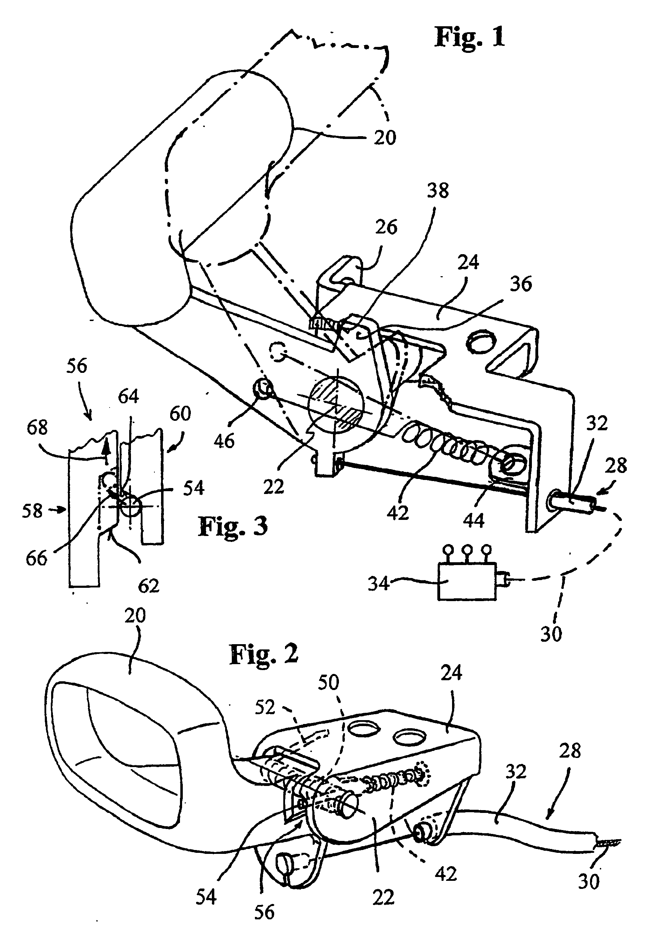

Wie Figur 1 zeigt, hat die Handhebelvorrichtung einen Handhebel 20, der um eine Schwenkachse 22 schwenkbar an einem Lagerteil 24 angeordnet ist. Die Handhebelvorrichtung ist Bestandteil eines Fahrzeugsitzes. Das Lagerteil 24 hat entsprechende Befestigungsbereiche 26, um an einem Teil des Fahrzeugsitzes festgelegt zu werden, beispielsweise mit einer Sitzschiene einer Längsverstellvorrichtung oder einem Sitzträger verbunden zu werden.

Durch den Handhebel 20 wird ein zugfestes oder druckfestes Betätigungsglied betätigt, das hier als Bowdenzug 28 ausgeführt ist. Eine Seele 30 des Bowdenzuges ist am Handhebel 20 gehalten, während eine Hülle 32 des Bowdenzuges am Lagerteil 24 festliegt.
Wie schematisch in Figur 1 dargestellt ist, ist am anderen Ende des Bowdenzuges 28 eine Betätigungsvorrichtung 34 vorgesehen, beispielsweise eine Mehrstiftarretierung einer Längsverstellvorrichtung.

Der Handhebel 20 hat zwei Endpositionen, diese werden mechanisch vorgegeben. Sie werden durch Endanschläge erhalten. Figur 1 zeigt hierzu ein Beispiel, das aber auch in ganz anderer Form ausgeführt sein kann, denn die konkrete Ausführung der Endanschläge ist für die Erfindung selbst ohne Belang. Der Handhebel hat einen nasenförmigen Vorsprung 36, der sich innerhalb einer Aussparung des Lagerteils 24 bewegt. Mit durchgezogenen Strichen ist in Figur 1 eine Position gezeigt, in der der Handhebel 20 seine Ruheposition hat, hier liegt der Vorsprung 36 an einem Anschlag 38 der Aussparung an.

Strichpunktiert ist in Figur 1 die zweite Endstellung, nämlich die Betätigungsstellung, gezeigt. Hier liegt der Handhebel 20 nicht an einem Anschlag des Lagerteils 24 an, vielmehr wird diese Endstellung durch einen Anschlag in der Betätigungsvorrichtung 34 vorgegeben.

Zwischen Handhebel 20 und Lagerteil 24 ist eine Feder 42 angeordnet, die hier als Schraubenzugfeder ausgeführt ist. Für sie hat das Lagerteil 24 ein Abstützteil in Form eines Auges 44, in das ein Ende der Zugfeder 42 eingehängt ist. Das andere Ende der Feder 42 ist in ein Loch 46 des Handhebels 20 eingehängt. Andere Befestigungsmöglichkeiten dieses zweiten Endes am Handhebel 20 sind ebenfalls möglich. Das Loch 46 befindet sich gesehen vom Auge 44 jenseits der Schwenkachse 22, die Entfernung des Auges 44 vom Loch 46 ist also größer als die Entfernung des Auges 44 von der Schwenkachse 42. Weiterhin ist das Loch 46 so positioniert, dass in einer Zwischenstellung zwischen den in Figur 1 gezeigten Endstellungen das Auge 44, die Schwenkachse 22 und das Loch 46 auf einer Geraden liegen. In diesem Zustand, der als Totstellung bezeichnet wird, bewirkt die Feder 42 kein Drehmoment auf den Handhebel 20.

Allgemein kommt es darauf an, dass die Wirklinie der Feder, die bei der in Figur 1 gezeigten Schraubenzugfeder mit ihrer tatsächlichen physikalischen Ausbildung übereinstimmt, im Totpunkt durch die Schwenkachse verläuft. In welcher Winkelstellung zwischen den beiden Endpositionen dies passiert, ist der Wahl des Konstrukteurs überlassen. Der Totpunkt fällt nicht mit einer Endposition zusammen. In Figur 1 ist die Wirklinie der Feder 42 für die Betätigungsstellung strichpunktiert eingezeichnet.

Anstelle einer Zugfeder kann auch eine Druckfeder eingesetzt werden, siehe Figur 2, dann aber muß der Angriffspunkt der Zugfeder am Handhebel, also das Loch 46, auf der dem Auge 44 zugewandten Seite der Schwenkachse 22 vorgesehen sein. Im Gegensatz zur Ausführung nach Figur 1, in der die Feder 42 ihre größte Länge im Totpunkt hat, hat eine Druckfeder ihre kleinste Länge im Totpunkt.

Im Ausführungsbeispiel nach den Figuren 2 und 3 ist zusätzlich zur schon besprochenen Feder 42, die einen Totpunkt, also eine Totpunktlinie, hat, eine weitere Feder vorgesehen, nämlich eine Zuschaltfeder 50. Sie ist als Drehfeder ausgeführt. Ein erster Abstützarm 52 an einem Ende liegt ständig mit einer Auflagekraft an der Unterseite des Lagerteils 24 an. Ein zweiter Abstützarm 54 steht ebenfalls unter Spannung, er liegt entweder ebenfalls am Lagerteil 24 oder aber am Handhebel 20 an. Die Anlage ist abhängig von der Position des Handhebels 20. Der Wechsel dieses zweiten Abstützarms 54 von einer Anlage am Lagerteil 24 zu einer Anlage am Handhebel 20 und zurück erfolgt in einem Umschaltbereich 56, wie er aus Figur 3 ersichtlich ist.

Im Umschaltbereich 56 haben Handhebel 20 und Lagerteil 24 zwei in enger Nachbarschaft zueinander angeordnete Bereiche 58, 60, die jeweils ein zentrisch zur Schwenkachse 22 verlaufendes Teilstück eines Bogens haben und jeweils eine Schräge 62, 64 aufweisen, die in einem Winkel größer 90 Grad und oberhalb der Selbsthemmung der verwendeten Materialien verlaufen, so dass der zweite Abstützarm 54 grundsätzlich die jeweilige Schräge 62, 64 des Bereichs, auf dem er sich gerade befindet, herunterrutschen würde, würde nicht der andere Bereich ihn daran hindern.

In der Anordnung gemäß Figur 3 ist der zweite Abstützarm 54 der Zuschaltfeder 50 in Anlage an der Schräge 64 des Lagerteils 24, er befindet sich also im Bereich 60. Er wird in seiner Position gehalten, weil winkelmäßig der Bereich 58 des Handhebels 20 entgegen der Richtung der beiden gezeichneten Pfeile 66, 68 weiter vorn liegt. Der Weg des zweiten Abstützarms 54 in Richtung des Schrägpfeils 66 ist versperrt, weil dort sich der Bereich 58 befindet. Wäre er dort nicht vorhanden, würde der zweite Abstützarm 54 allerdings im Sinne des Schrägpfeils 66 wegrutschen. Anders ausgedrückt hat der zweite Abstützarm 54 auf keiner der beiden Schrägen 62, 64 eine stabile Lage, vielmehr rutscht er von diesen Schrägen 62, 64 selbsttätig herunter, falls er nicht durch einen Bereich gehalten wird.

Wird nun der Bereich 58 des Handhebels 20 im Sinne des Pfeils 68 verschwenkt, kommt er in die strichpunktiert angedeutete Position, in der nun nicht mehr der zweite Abstützarm 54 an der Schräge 64 gehalten ist, vielmehr in die strichpunktierte Position rutscht.

Bei Rückbewegung in Gegenrichtung zum Pfeil 68 findet wieder die gegensinnige Bewegung statt. Der zweite Abstützarm 54 wird also wieder auf den Bereich 60 des Lagerteils 24 transportiert.

Insgesamt ist also ein Umschaltbereich 56 vorgesehen, der folgende Funktion hat: Abhängig von der Winkelposition des Handhebels 20 befindet sich der zweite Abstützarm 54 entweder in Anlage am Lagerteil 24 oder am Handhebel 20 und wird in einem Zwischenbereich der Winkelstellung des Handhebels 20 von der einen Position in die andere geschaltet. Ausgehend von der Ruheposition bis zur Winkelstellung, in der das Umschalten stattfindet, befindet sich der zweite Abstützarm 54 in Anlage am Lagerteil 60, macht sich also für die Stellbewegung nicht bemerkbar. Wenn der Umschaltwinkel erreicht ist, rutscht im Umschaltbereich 56 der zweite Abstützarm 54 auf die Schräge 62 des Handhebels 20 und drückt nun den Handhebel weiter in Richtung des Pfeils 68, also in Drehrichtung zur Betätigungsstellung hin. Auf diese Weise kann eine plötzlich einsetzende Lösekraft der Betätigungsvorrichtung 54 mehr oder weniger kompensiert werden. Bis zur Betätigungsstellung bleibt der zweite Abstützarm 54 in kraftschlüssiger Anlage am Handhebel 20.

Wird nun der Handhebel 20 aus der Betätigungsstellung wieder zurückbewegt, also beispielsweise freigegeben, laufen die entgegengesetzten Vorgänge ab. Im Winkelbereich, der der Umschaltung entspricht, rutscht nun der zweite Abstützarm 54 von der Schräge 62 des Handhebels 20 ab und gelangt auf die Schräge 64 des Lagerteils 24. Dies bleibt so, bis die Ruheposition wieder erreicht ist. Die Zuschaltfeder 50 steht unter gezielt vorgegebener, gewollter Drehspannung, die jeweils dem Kraftbedarf der Betätigungseinrichtung 34 angepaßt werden kann.

In der Anordnung gemäß Figur 3 ist der zweite Abstützarm 54 der Zuschaltfeder 50 in Anlage an der Schräge 64 des Lagerteils 24, er befindet sich also im Bereich 60. Er wird in seiner Position gehalten, weil winkelmäßig der Bereich 58 des Handhebels 20 entgegen der Richtung der beiden gezeichneten Pfeile 66, 68 weiter vorn liegt. Der Weg des zweiten Abstützarms 54 in Richtung des Schrägpfeils 66 ist versperrt, weil dort sich der Bereich 58 befindet. Wäre er dort nicht vorhanden, würde der zweite Abstützarm 54 allerdings im Sinne des Schrägpfeils 66 wegrutschen. Anders ausgedrückt hat der zweite Abstützarm 54 auf keiner der beiden Schrägen 62, 64 eine stabile Lage, vielmehr rutscht er von diesen Schrägen 62, 64 selbsttätig herunter, falls er nicht durch einen Bereich gehalten wird.

Wird nun der Bereich 58 des Handhebels 20 im Sinne des Pfeils 68 verschwenkt, kommt er in die strichpunktiert angedeutete Position, in der nun nicht mehr der zweite Abstützarm 54 an der Schräge 64 gehalten ist, vielmehr in die strichpunktierte Position rutscht.

Bei Rückbewegung in Gegenrichtung zum Pfeil 68 findet wieder die gegensinnige Bewegung statt. Der zweite Abstützarm 54 wird also wieder auf den Bereich 60 des Lagerteils 24 transportiert.

Insgesamt ist also ein Umschaltbereich 56 vorgesehen, der folgende Funktion hat: Abhängig von der Winkelposition des Handhebels 20 befindet sich der zweite Abstützarm 54 entweder in Anlage am Lagerteil 24 oder am Handhebel 20 und wird in einem Zwischenbereich der Winkelstellung des Handhebels 20 von der einen Position in die andere geschaltet. Ausgehend von der Ruheposition bis zur Winkelstellung, in der das Umschalten stattfindet, befindet sich der zweite Abstützarm 54 in Anlage am Lagerteil 60, macht sich also für die Stellbewegung nicht bemerkbar. Wenn der Umschaltwinkel erreicht ist, rutscht im Umschaltbereich 56 der zweite Abstützarm 54 auf die Schräge 62 des Handhebels 20 und drückt nun den Handhebel weiter in Richtung des Pfeils 68, also in Drehrichtung zur Betätigungsstellung hin. Auf diese Weise kann eine plötzlich einsetzende Lösekraft der Betätigungsvorrichtung 54 mehr oder weniger kompensiert werden. Bis zur Betätigungsstellung bleibt der zweite Abstützarm 54 in kraftschlüssiger Anlage am Handhebel 20.

## Patentansprüche

1. Handhebelvorrichtung für eine Betätigungseinrichtung, die als Mehrstiftarretierungsvorrichtung ausgebildet ist, an einem Fahrzeugsitz mit einem Lagerteil (24), das mit dem Fahrzeugsitz verbunden ist und mit einem Handhebel (20), der a) um eine Schwenkachse (22) schwenkbar an dem Lagerteil (24) des Fahrzeugsitzes gelagert ist, der b) mit einem Betätigungsglied, z.B. einem Bowdenzug (28), bewegungsverbunden ist und der c) um die Schwenkachse (22) zwischen einer Ruheposition und einer Betätigungsstellung schwenkbar ist, wobei das Betätigungsglied unter der Wirkung mindestens einer Feder der Mehrstiftarretiervorrichtung steht, **dadurch gekennzeichnet, dass** zwischen Lagerteil (24) und Handhebel (20) eine Feder (42) angeordnet ist, dass die Feder (42) zwischen der Ruheposition und der Betätigungsstellung des Handhebels (20) einen Totpunkt aufweist, in dem sie sowohl maximale Federspannung hat als auch ein minimales Drehmoment auf den Handhebel (20) ausübt und die andererseits den Handhebel (20) zumindest in seine Ruhepositionelastisch vorbelastet, und dass dann, wenn die Handhebelvorrichtung mit der Betätigungseinrichtung verbunden ist, der Handhebel nur in seine Ruheposition elastisch vorbelastet ist.

2. Handhebelvorrichtung nach Anspruch 1, **dadurch gekennzeichnet, dass** die Winkelposition des Handhebels (20) im Totpunkt der Feder (42) einer Endstellung, z .B. der Ruheposition, näher ist als der Betätigungsstellung, und dass der Totpunkt nicht mit einer Endstellung, nämlich nicht mit der Ruheposition und nicht mit der Betätigungsstellung zusammenfällt.

3. Handhebelvorrichtung nach Anspruch 1, **dadurch gekennzeichnet, dass** die Feder (42) eine Zugfeder ist und einen eisten und einen zweiten Angriffspunkt hat, von denen der erste Angriffspunkt am Handhebel (20) angeordnet ist und der zweite Angriffspunkt am Lagerteil (24) angreift, wobei der Abstand zwischen den beiden Angriffspunkten größer ist als der Abstand zwischen mindestens einem Angriffspunkt, vorzugsweise dem ersten Angriffspunkt, und der Schwenkachse (22).

4. Handhebelvorrichtung nach Anspruch 1, **dadurch gekennzeichnet, dass** die Feder (42) eine Druckfeder ist und einen ersten und einen zweiten Angriffspunkt hat, von denen der erste Angriffspunkt am Handhebel (20) angeordnet ist und der zweite Angriffspunkt am Lagerteil (24) angreift, wobei der Abstand zwischen den beiden Angriffspunkten kleiner ist als der Abstand zwischen mindestens einem Angriffspunkt, insbesondere des ersten Angriffspunktes, von der Schwenkachse (22).

5. Handhebelvorrichtung nach Anspruch 1, **dadurch gekennzeichnet, dass** die Mehrstiftarretierungsvorrichtung eine Mehrstiftarretiervorrichtung für die Arretierung einer Längsverstellvorrichtung zweier Schienen des Fahrzeugsitzes ist.

6. Handhebelvorrichtung nach Anspruch 1, **dadurch gekennzeichnet, dass** die Federspannung der Feder (42) in der Ruheposition so bemessen ist, dass der Handhebel (20) in der Ruheposition bei normalem Fahrbetrieb des mit dem Fahrzeugsitz ausgerüsteten Fahrzeugs normalerweise klapperfrei gehalten ist.

7. Handhebelvorrichtung nach Anspruch 1, **dadurch gekennzeichnet, dass** das Betätigungsglied ein Bowdenzug (28) ist, der eine Seele (30), die mit dem Handhebel (20) verbunden ist, und eine Hülle (32) aufweist, die mit dem Lagerteil (24) verbunden ist.

8. Handhebelvorrichtung nach Anspruch 1, **dadurch gekennzeichnet, dass** die Feder (42) eine Wirklinie hat, die im Totpunkt die Schwenkachse (22) schneidet.

## Claims

1. A hand lever device for an actuation system being formed as a multiple pin lock device, on a vehicle seat with a bearing member (24) that is connected to the vehicle seat and with a hand lever (20) that a) is mounted on a bearing member (24) of the vehicle seat so as to be pivotal about a pivot axis (22), that b) is motion-linked to an actuation member, e.g., a Bowden cable (28) and that c) is pivotal about the pivot axis (22) between a rest position and an actuating position, the actuation member being under the action of at least one spring of the multiple pin lock device, **characterized in that** a spring (42) is disposed between the bearing member (24) and the hand lever (20), that the spring (42) on the one side comprises, between the rest position and the actuating position of the hand lever (20), a dead spot in which it both is in its maximum tension and exerts a minimum torque onto the hand lever (20) and on the other side elastically biases the hand lever (20) at least in its rest position, and that in case when the hand lever device is connected with the actuation system, the hand lever (20) is only elastically biased in its rest position.

2. The hand lever device according to claim 1, **characterized in that** the angular position of the hand lever (20) in the dead spot of the spring (42) is nearer to one end position e.g., to the rest position, than to the actuating position and that the dead spot does not coincide with an end position, namely neither with the rest position nor with the actuating position.

3. The hand lever device according to claim 1, **characterized in that** the spring (42) is a tension spring and has a first and a second point of application, the first point of application being disposed on the hand lever (20) and the second point of application on the bearing member (24), the distance between the two points of application being greater than the distance between at least one point of application, preferably the first point of application, and the pivot axis (22).

4. The hand lever device according to claim 1, **characterized in that** the spring (42) is a compression spring and has a first and a second point of application, the first point of application being disposed on the hand lever (20) and the second point of application on the bearing member (24), the distance between the two points of application being smaller than the distance between at least one point of application, more specifically the first point of application, and the pivot axis (22).

5. The hand lever device according to claim 1, **characterized in that** the multiple pin lock device is a multiple pin lock device for locking a lengthwise adjustment device for the two rails of a vehicle seat.

6. The hand lever device according to claim 1, **characterized in that** the spring tension of the spring (42) in the rest position is designed in such a manner that, when at rest under normal driving conditions of the vehicle equipped with the vehicle seat, the hand lever (20) is retained in such a manner that it normally does not rattle.

7. The hand lever device according to claim 1, **characterized in that** the actuating member is a Bowden cable (28) comprising a core (30) which is connected to the hand lever (20) and a sheath (32) which is connected to the bearing member (24).

8. The hand lever device according to claim 1, **characterized in that** the spring (42) has a line of action that intersects the pivot axis (22) in the dead spot.

## Revendications

1. Système de manette pour un dispositif de commande étant réalisé comme système d'arrêt à ergots multiples, monté sur un siège de véhicule avec une pièce d'appui (24) qui est reliée au siège de véhicule et avec une manette (20) qui a) est montée pivotante autour d'un axe de pivotement (22) sur la pièce d'appui (24) du siège de véhicule, b) est solidaire du mouvement d'un organe de commande, p. ex. d'un câble de type Bowden (28), et c) est mobile en pivotement autour de l'axe de pivotement (22) entre une position de repos et une position de commande, l'organe de commande étant sous l'action de au moins un ressort du système d'arrêt à ergots multiples, **caractérisé en ce que** un ressort (42) est disposé entre la pièce d'appui (24) et la manette (20), que le ressort (42) d'une part comporte, entre la position de repos et la position de commande de la manette (20), un point mort où il non seulement est tendu au maximum mais aussi exerce sur la manette (20) un couple minimum et d'autre part sollicite élastiquement la manette (20) du moins vers sa position de repos, et **en ce que**, si le système de manette est relié avec dispositif de commande, la manette (20) est sollicite élastiquement seulement vers sa position de repos.

2. Système de manette selon la revendication 1, **caractérisé en ce qu'**au point mort du ressort (42), la position angulaire de la manette (20) est plus proche d'une position extrême, de la position de repos p.ex., que de la position de commande et que le point mort n'est pas confondu avec une position extrême, c'est-à-dire ni avec la position de repos, ni avec la position de commande.

3. Système de manette selon la revendication 1, **caractérisé en ce que** le ressort (42) est un ressort de traction et a un premier et un deuxième point d'action, le premier point d'action étant disposé sur la manette (20) et le deuxième point d'action agissant sur la pièce d'appui (24), l'écartement entre les deux points d'action étant supérieur à l'écartement entre au moins un point d'action, de préférence le premier point d'action, et l'axe de pivotement (22).

4. Système de manette selon la revendication 1, **caractérisé en ce que** le ressort (42) est un ressort de compression et a un premier et un deuxième point d'action, le premier point d'action étant disposé sur la manette (20) et le deuxième point d'action agissant sur la pièce d'appui (24), l'écartement entre les deux points d'action étant inférieur à l'écartement entre au moins un point d'action, notamment le premier point d'action, et l'axe de pivotement (22).

5. Système de manette selon la revendication 1, **caractérisé en ce que** le système d'arrêt à ergots multiples est un système d'arrêt à ergots multiples destiné à arrêter le dispositif de réglage longitudinal de deux glissières du siège de véhicule.

6. Système de manette selon la revendication 1, **caractérisé en ce que** la tension du ressort (42) en position de repos est déterminée de telle sorte qu'en position de repos la manette (20) est normalement retenue de manière à ne pas faire de bruit en situation normale de roulage du véhicule équipé du siège de véhicule.

7. Système de manette selon la revendication 1, **caractérisé en ce que** l'organe de commande est un câble de type Bowden (28) comportant une âme (30) qui est reliée à la manette (20) et une enveloppe (32) qui est reliée à la pièce d'appui (24).

8. Système de manette selon la revendication 1, **caractérisé en ce que** le ressort (42) a une ligne d'action qui coupe l'axe de pivotement (22) au point mort.
